# EUROPEAN PATENT SPECIFICATION

(11) **EP 4 011 647 B1**
(45) Date of publication and mention of the grant of the patent: **01.10.2025**
(21) Application number: 21211335.1
(22) Date of filing: 30.11.2021
(51) Int. Cl.: B60C 9/22, B60C 11/00, B60C 9/20, B60C 11/13

(54) **TRUCK TIRE**
LASTWAGENREIFEN
PNEUMATIQUE DE CAMION

(30) Priority: 14.12.2020 US 202017120334
(43) Date of publication of application: 15.06.2022
(73) Proprietor: The Goodyear Tire & Rubber Company, Akron, OH 44316 (US)
(72) Inventor: MULLER, Philippe Joseph Auguste, B-6971 Champlon (BE); PASSANTE SPACCAPIETRA, Ettore, L-9070 Ettelbruck (LU); WINKIN, Didier, B-6600 Bastogne (BE); GERARD, Denis, B-6700 Stockem (BE); MANOGARAN, Arun Prasath, L-7740 Colmar-Berg (LU)
(74) Representative: Kutsch, Bernd

(56) References cited:
- EP-A1- 2 708 382
- EP-A1- 3 323 633
- EP-A2- 2 199 104
- EP-A2- 2 889 157
- JP-A- 2009 126 314

## Description

### Field of the Invention

The invention relates in general to pneumatic tires, and more particularly for heavy vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability, improved resistance to groove cracking and increased load carrying capacity is desired.

EP 2 199 104 A2 describes a tire in accordance with the preamble of claim 1.

EP 2 889 157 A2 and JP 2009 126314 A describe tires with a tread having a tread cap rubber compound with a specified tensile strength and elongation at break.

### Summary of the Invention

The invention relates to a tire in accordance with claim 1.

Dependent claims refer to preferred embodiments of the invention.

The invention provides a pneumatic tire for use on trucks. wherein the tire has a tread and a belt reinforcement structure located radially inward of the tread, the belt structure including a first and second working belt, wherein the first and second working belts are formed of extensible reinforcements, wherein the angle of the first and second working belts range from 10 degrees to 50 degrees as measured relative to the circumferential direction, wherein the belt structure further comprises a relatively low angle belt having reinforcements angled at less than 5 degrees relative to the circumferential direction, wherein the relatively low angle belt has extensible reinforcements, and wherein the tread has at least one groove reinforced with a tread compound having a tensile strength at break greater than 18 MPa and an elongation at break greater than 450%, when measured at 23°C and having a tensile strength at break greater than 12 MPa and an elongation at break greater than 600%, when measured at 100°.

### Definitions

"Aspect Ratio" means the ratio of a tire's section height to its section width.

"Axial" and "axially" mean the lines or directions that are parallel to the axis of rotation of the tire.

"Belt Structure" or "Reinforcing Belts" means preferably at least two annular layers or plies of parallel cords, woven or unwoven, underlying the tread, unanchored to the bead.

"Circumferential" means lines or directions perpendicular to the axial direction of the tire and along the perimeter of the tire.

"Cord" means one of the reinforcement strands, including fibers, which are used to reinforce the plies.

"Extensible" means a cord or wire having a relative elongation at break of greater than 0.2% at 10% of the breaking load, when measured from a cord or wire extracted from a cured tire. The tensile strength measurements for elongation at break (total elongation in %) are performed in accordance with ISO 6892-1 B (2019) at preload no more than 25 MPa, such as 10 MPa, tested on a wire or cord taken from a cured tire.

"Ply" means a cord-reinforced layer of elastomer-coated, radially deployed or otherwise parallel cords.

"Radial" and "radially" mean directions radially toward or away from the axis of rotation of the tire.

### Brief Description of the Drawings

The invention will be described by way of example and with reference to the accompanying drawings in which:
FIG. 1 is a cross-sectional view of a first embodiment of a tire of the present invention;

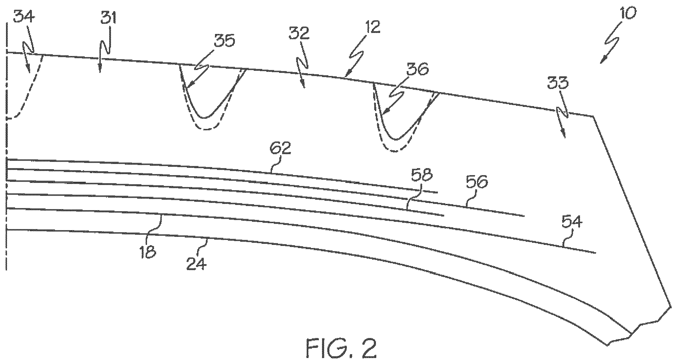

FIG. 2 is a close-up view of the belt package of the tire of FIG. 1; and
FIG. 3 is a close-up view of the reinforced groove of the tire of FIG. 1.

### Detailed Description of Preferred Embodiment of the Invention

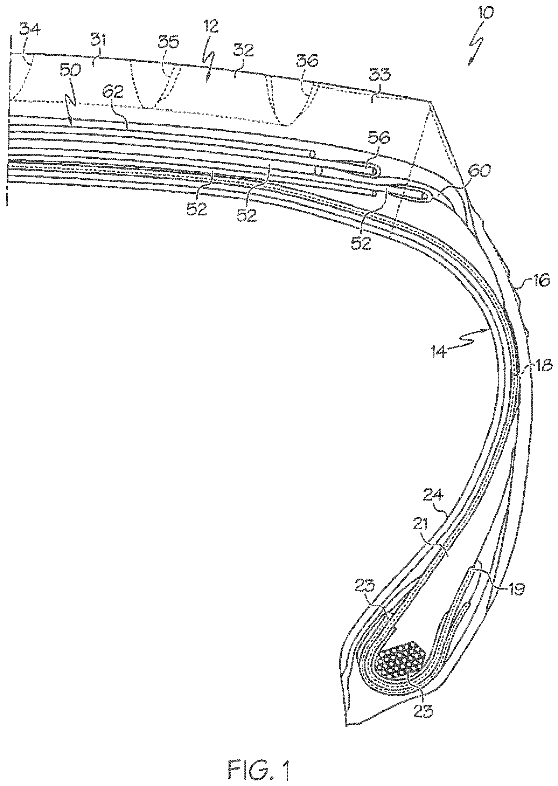

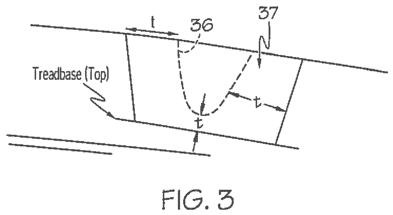

Figure 1 illustrates a first embodiment of one half of a pneumatic tire 10, suitable for use as a truck tire. The tire 10 has a tread 12 with a non-skid depth D. The tire tread 12 preferably comprises a plurality of circumferentially continuous ribs, which may vary, but are shown for example as ribs 31, 32 and 33. Positioned between each rib is a circumferential groove 34, 35, 36, which are preferably continuous. As shown in Figure 3, at least one of the grooves 34, 35, 36 is reinforced with a tread compound forming a groove reinforcement structure 37 having the following properties: a tensile strength at break greater than 18 MPa, when measured at 23°C. The groove reinforcement compound further has an elongation at break greater than 450% when measured at 23°C.

Preferably, all the grooves 34, 35, 36 are reinforced with a groove reinforcement tread compound. Preferably, the groove reinforcement 37 has a thickness t that is in the range of from 2 mm to 15 mm or from 2 to 8 mm, that surrounds the groove surface.

Additionally, the groove reinforcement tread compound has a high temperature tensile strength at break greater than 12 MPA or greater than 18 MPa, when measured at 100°C and an elongation at break greater than 600% when measured at 100°C.

The tensile strength measurements such as the load at break (maximum load in N), strength at break (in MPa) and elongation at break (total elongation in %) are performed in tension in accordance with ISO 6892-1 B (2019) at a pre-load no more than 25 MPa, such as 10 MPa, tested on a cable or wire when taken from a cured tire.

A method to characterize tensile strength such as the load at break (maximum load in N), strength at break (in MPa) and elongation at break (total elongation in %) is also provided in DIN 53504-2009-10.

The characterization of tensile strength and elongation at break is performed on samples taken from cured tires at the temperature specified above.

Preferably, the grooves 34, 35, 36 are circumferential grooves and at least one, several or all of said circumferential grooves 34, 35, 36 are reinforced with said reinforcing tread compound.

In a preferred embodiment, the groove reinforcing tread compound is located radially below and/or axially on one or both sides of the respective groove 34, 35, 36 as a groove reinforcement structure 37. More preferably and as shown in Fig. 3, the groove reinforcing tread compound is located radially below and axially on both sides of the respective groove 34, 35, 36 as a groove reinforcement structure 37 such that the groove reinforcement structure 37 encloses the groove 34, 35, 36.

The tire 10 further comprises a casing 14 which includes two opposed sidewalls 16 which extend down from the tread 12 to the bead area. The casing of the tire preferably includes an inner liner 24 which is typically formed of halobutyl rubber which forms an air impervious barrier. The tire casing 14 further includes one or more radial plies 18 extending from the tread, down the sidewall to the tire bead 20. Preferably, the radial ply 18 is wrapped about or otherwise secured to each annular bead 20. In the embodiment illustrated, there is only one ply 18 and it is wrapped around the bead in an inside out manner such that the ply ending 19 is located axially outward and radially outwards of the bead. The beads 20 may be any desired shape, but in this embodiment, it is shown as a hexagonal configuration with steel filaments.

The tire may further optionally include an apex 21 which may be shaped like a triangle. The ply turnup in the bead area may be optionally reinforced with a chipper 23 wrapped about the bead ply 18.

### Aspect Ratio

The aspect ratio of the tire described is preferably in the range of from 45 to 90 or from 50 to 90. The tire preferably has a net to gross ratio in the range of from 70 to 90, more preferably in the range of from 74 to 86 or from 78 to 84.

The tire 10 further includes a belt package 50 which is located between the tread 12 and the one or more plies 18. The belt package 50 comprises several layers comprising reinforcement.

The ply 18 and the belt reinforcing structure 50 are made from cord reinforced elastomeric material, wherein the cords are typically steel wire or polyamide filaments and the elastomer preferably being rubber.

### Working Belts 54, 56

Belt reinforcing structure 50 includes a first working belt 54 and a second working belt 56, which preferably comprise extensible reinforcement cords. The first working belt 54 is located radially inwards of the second working belt 56.

Preferably, first working belt 54 has a belt width substantially equal to the tread arc width and is preferably the widest belt of the belt package 50.

The breaker angle of first working belt 54 is between 10 and 50 degrees, preferably with a right orientation, more preferably in the range of 14 to 42 degrees, and more preferably in the range of 16 to 35 degrees.

Preferably, the first working belt 54 comprises extensible or high elongation wire and has a % elongation at 10% of breaking load of greater than 0.2%, as measured from a cord taken from a cured tire. More, preferably, the % elongation at the 10% of breaking load is greater than 0.4 %, and even preferably greater than 0.8%, and most preferably greater than 1.2%.

The tensile measurements on the working belts 54, 56 such as the load at break (maximum load in N), strength at break (in MPa) and elongation at break (total elongation in %) are performed in tension in accordance with ISO 6892-1 B (2019) at a pre-load no more than 25 MPa, such as 10 MPa, tested on a cable or wire taken from a cured tire.

A method to characterize tensile strength such as the load at break (maximum load in N), strength at break (in MPa) and elongation at break (total elongation in %) is also provided in DIN 53504-2009-10.

The characterization of tensile strength is performed on samples taken from a cured tire at the temperature specified above.

The first working belt 54 preferably comprises a reinforcement cord formed of wire having a wire construction of 3x7x, 3x4x, 4x4x, or, preferably, of 4+3x. Preferably, the cord construction is 4+3x0.35 UT (UT = ultra-tensile steel). The EPI (ends per 2.54 cm) preferably range from 8 to 14.

The second working belt 56 is located radially outward of the first working belt 54, and preferably has a width less than the width of first working belt 54. Preferably, the second working belt 56 has a width less than the width of belt 54 by a step off, which preferably ranges from 10 to 20 mm. Preferably, the gauge cord to cord between the second working 56 belt and the first working belt 54 is less than 6 mm.

The working belt 56 has a breaker angle between 10 to 50 degrees, and more preferably in the range of 14 to 42 degrees, preferably with a left orientation, and more preferably in the range of 16 to 35 degrees.

Preferably, the breaker angle of the first working belt 54 is different than the breaker angle of the second working belt 56.

The angle of either the first or second working belt is the angle of the parallel reinforcement cords relative to the circumferential direction of the tire 10.

More preferably, the angle of the first working belt α₁ is greater than the angle of the second working belt α₂.

Preferably, the absolute difference of the angle of the first working belt 54 and the angle of the second working belt 56 |α₁- α₂| is greater than 5 degrees.

Preferably, the second working belt 56 comprises extensible or high elongation wire and has a % elongation at 10% of breaking load of greater than 0.2%, as measured from a cord taken from a cured tire. More, preferably, the % elongation at the 10% of breaking load is greater than 0.4 %, and even preferably greater than 0.8%, and most preferably greater than 1.2%.

The second working belt 56 preferably comprises a reinforcement cord formed of wire having a wire construction of 3x7x, 3x4x, 4x4x, or, preferably, of 4+3x. Preferably, the cord construction is 4+3x0.35 UT (UT = ultra-tensile steel). The EPI (ends per 2.54 cm) preferably range from 8 to 14.

The second working belt 56 is preferably made of extensible cord or wire having the same construction with the same but opposite angular orientation as the first working belt 54.

### Relatively Low Angle Belt 58

The belt structure 50 further comprises a relatively low angle belt 58 which is preferably located between the working pair belts, 54, 56. The relatively low angle belt 58 may also be located between belts 52 and 54 or radially outward of belt 56.

The relatively low angle belt 58 has reinforcements that are oriented circumferentially at 5 degrees or less, preferably 0 degrees.

The relatively low angle belt 58 belt is preferably formed from spirally winding a rubberized strip of one or more cords.

Preferably, the strip has 1 to 4 steel cords, and has a strip width less than 15 mm, and more preferably 5 mm or 5 mm to 8 mm.

Alternatively, the belt may be formed of a cut belt with the reinforcements oriented in the range of 0 to 10 degrees from the circumferential direction, or more preferably in the range of zero to five degrees from the circumferential direction.

The relatively low angle belt 58 has a width sized to avoid compression in the shoulder area.

The belt width of the relatively low angle belt 58 is preferably less than the belt width of the first and second working belts 54, 56 and is preferably wider than the top belt 62.

The belt structure of the relatively low angle belt 58 may be steel formed of a 3x7 construction, a 3x4 construction, or a 4x4 construction. More preferably, the belt structure of the relatively low angle belt 58 is steel formed of a 3x7x0.22 construction, a 3x4x0.26 construction, or a 4x4x0.22 construction, and preferably formed of high tensile steel.

The reinforcement cords of the relatively low angle belt 58 are extensible. For measurements taken from bare cords, the % elongation at 10% of breaking load is 0.2 or more, and preferably 0.4 % or more, and more preferably 0.6% or more, and most preferably 0.8%. The tensile measurements such as the load at break (maximum load in N), strength at break (in MPa) and elongation at break (total elongation in %) are performed in tension in accordance with ISO 6892-1 B (2019) at a pre-load no more than 25 MPA, such as 10 MPa, tested on a cable or wire taken from a cured tire.

Alternatively, the relatively low angle belt may be formed of non-metal reinforcements such as aramid, carbon fiber, or polyketone or POK.

### Top Protection Belt

The belt structure may further include a top protector belt 62 that is the radially outermost belt. The top protector belt 62 preferably has a width that is in the range of from 80% to 85% of the width of the relatively low angle belt 58. Preferably, the top protector belt 62 has the same breaker angle and orientation as the adjacent working belt 56.

Overall, the tire in accordance with the invention has improved shock absorbing characteristics during an impact, improved tread crack resistance and an improved stress relieve. This leads to an improved crown durability and increased load carrying capacity. The tire also shows excellent retreadability.

## Claims

1. A pneumatic tire for use on trucks, the tire (10) comprising a tread (12) and a belt structure (50) located radially inward of the tread (12), the belt structure (50) including a first working belt (54) and a second working belt (56), wherein the angle of the first and second working belts (54, 56) range from 10 degrees to 50 degrees as measured relative to the circumferential direction of the tire (10), wherein the belt structure (50) further comprises a relatively low angle belt (58) having extensible reinforcement cords angled at less than 5 degrees relative to the circumferential direction of the tire (10), and wherein the tread (12) comprises at least one groove (34, 35, 36) reinforced with a tread compound, **characterized in that** the tread compound has a tensile strength at break greater than 18 MPa and an elongation at break greater than 450%, when measured at 23°C, and **in that** the tread compound has a tensile strength at break greater than 12 MPa and an elongation at break greater than 600%, when measured at 100°C.

2. The tire of claim 1 wherein the angle of the first working belt (54) with the circumferential direction of the tire (10) is different than the angle of the second working belt (56) with the circumferential direction of the tire (10).

3. The tire of claim 1 wherein the angle of the first working belt (54) with the circumferential direction of the tire (10) is greater than the angle of the second working belt (56) with the circumferential direction of the tire (10).

4. The tire of at least one of the previous claims wherein the absolute value of the difference between the angle of the first working belt (54) with the circumferential direction of the tire (10) minus the angle of the second working belt (56) with the circumferential direction of the tire (10) is greater than 5 degrees.

5. The tire of at least one of the previous claims wherein the tire (10) further includes a top belt (62), and wherein the axial width of the relatively low angle belt (58) is greater than the axial width of the top belt (62).

6. The tire of claim 1 wherein the first and the second working belt (54, 56) comprise extensible reinforcement cords.

7. The tire of claim 6 wherein the extensible reinforcement cords are formed of wire having a % elongation at 10% of breaking load greater than 0.2 %, alternatively greater than 0.4 %, when taken from wire from a cured tire.

8. The tire of at least one of the previous claims wherein the extensible reinforcement cords of the relatively low angle belt (58) are formed of wire having a % elongation at 10% of breaking load greater than 0.2 %, alternatively greater than 0.4% or greater than 0.8%, when taken from wire from a cured tire.

9. The tire of at least one of the previous claims wherein the extensible reinforcement cords of the relatively low angle belt (58) are formed of wire having a % elongation at 10% of breaking load greater than 1.2 %, when taken from wire from a cured tire.

10. The tire of at least one of the previous claims wherein the gauge from cord to cord between the second working belt (56) and the first working belt (54) is less than 6 mm.

11. The tire of at least one of the previous claims wherein the half axial belt width of the first working belt (54) minus the half axial belt width of the second belt (56) is in a range of from 10 mm to 18 mm.

12. The tire of at least one of the previous claims wherein said grooves (34, 35, 36) are circumferential grooves and wherein at least one, several or all of said circumferential grooves are reinforced with said reinforcing tread compound.

13. The tire of at least one of the previous claims wherein the groove reinforcing tread compound is located radially below and/or axially on one or both sides of the respective groove (34, 35, 36) as a groove reinforcement structure (37); or wherein the groove reinforcing tread compound is located radially below and axially on both sides of the respective groove (34, 35, 36) as a groove reinforcement structure (37) such that the groove reinforcement structure (37) encloses the groove (34, 35, 36).

14. The tire of at least one of the previous claims wherein the minimum radial thickness (t) of the groove reinforcement structure (37) under a respective groove (34, 35, 36) is in the range of from 2 to 15 mm, preferably 2 to 5 mm; and/or wherein the minimum axial thickness of the groove reinforcement structure (37) laterally adjacent a respective groove (34, 35, 36) is in the range of from 2 to 15 mm, preferably 2 to 8 mm.

## Patentansprüche

1. Luftreifen zur Verwendung an Lastkraftwagen, wobei der Reifen (10) eine Lauffläche (12) und eine Gürtelstruktur (50) umfasst, die in der radialen Richtung innerhalb der Lauffläche (12) angebracht ist; wobei die Gürtelstruktur (50) einen ersten Arbeitsgürtel (54) und einen zweiten Arbeitsgürtel (56) umfasst; wobei der Winkel, der durch den ersten und den zweiten Arbeitsgürtel (54, 56) gebildet wird, in einem Bereich von 10 Grad bis 50 Grad liegt, wie gemessen in Bezug auf die Umfangsrichtung des Reifens (10); wobei die Gürtelstruktur (50) ferner einen einen relativ kleinen Winkel bildenden Gürtel (58) umfasst, der dehnbare Verstärkungskorde besitzt, die einen Winkel von mindestens 5 Grad in Bezug auf die Umfangsrichtung des Reifens (10) bilden; und wobei die Lauffläche (12) mindestens eine Nut (34, 35, 36) umfasst, die mit einer Laufflächenverbindung verstärkt ist; **dadurch gekennzeichnet, dass** die Laufflächenverbindung eine Zugfestigkeit von mehr als 18 MPa und eine Bruchdehnung von mehr als 450 % aufweist, wenn die Messungen bei 23 °C durchgeführt werden; und dass die Laufflächenverbindung eine Zugfestigkeit von mehr als 12 MPa und eine Bruchdehnung von mehr als 600 % aufweist, wenn die Messungen bei 100 °C durchgeführt werden.

2. Reifen nach Anspruch 1, wobei der Winkel, den der erste Arbeitsgürtel (54) mit der Umfangsrichtung des Reifens (10) bildet, ungleich dem Winkel ist, den der zweite Arbeitsgürtel (56) mit der Umfangsrichtung des Reifens (10) bildet.

3. Reifen nach Anspruch 1, wobei der Winkel, den der erste Arbeitsgürtel (54) mit der Umfangsrichtung des Reifens (10) bildet, größer ist als der Winkel, den der zweite Arbeitsgürtel (56) mit der Umfangsrichtung des Reifens (10) bildet.

4. Reifen nach mindestens einem der vorhergehenden Ansprüche, wobei der Absolutwert der Differenz zwischen dem Winkel, den der erste Arbeitsgürtel (54) mit der Umfangsrichtung des Reifens (10) bildet, und dem Winkel, den der zweite Arbeitsgürtel (56) mit der Umfangsrichtung des Reifens (10) bildet, größer als 5 Grad ist.

5. Reifen nach mindestens einem der vorhergehenden Ansprüche, wobei der Reifen (10) zusätzlich einen oberen Gürtel (62) umfasst; und wobei die axiale Breite des Gürtels (58), der einen relativ kleinen Winkel bildet, größer ist als die axiale Breite des oberen Gürtels (62).

6. Reifen nach Anspruch 1, wobei der erste und der zweite Arbeitsgürtel (54, 56) dehnbare Verstärkungskorde umfassen.

7. Reifen nach Anspruch 6, wobei die dehnbaren Verstärkungskorde aus einem Metalldraht ausgebildet sind, der eine Bruchdehnung von mehr als 0,2 %, in der Variante mehr als 0,4 %, bei 10 % der Bruchlast besitzt, gemessen an einem Metalldraht, der aus einem vulkanisierten Reifen stammt.

8. Reifen nach mindestens einem der vorhergehenden Ansprüche, wobei die dehnbaren Verstärkungskorde des Gürtels (58), die einen relativ kleinen Winkel bilden, aus einem Metalldraht ausgebildet sind, der eine Bruchdehnung in % bei 10 % der Bruchlast besitzt, die größer als 0,2 %, alternativ größer als 0,4 % ist, oder größer als 0,8 % beträgt, gemessen an einem Metalldraht, der aus einem vulkanisierten Reifen stammt.

9. Reifen nach mindestens einem der vorstehenden Ansprüche, wobei die dehnbaren Verstärkungskorde des Gürtels (58), die einen relativ kleinen Winkel bilden, aus einem Metalldraht ausgebildet sind, der eine Bruchdehnung von mehr als 1,2 %, bezogen auf 10 % der Bruchlast, besitzt, gemessen an einem Metalldraht, der aus einem vulkanisierten Reifen stammt.

10. Reifen nach mindestens einem der vorhergehenden Ansprüche, wobei der Abstand von einem Kord zu dem anderen zwischen dem zweiten Arbeitsgürtel (56) und dem ersten Arbeitsgürtel (54) kleiner als 6 mm ist.

11. Reifen nach mindestens einem der vorhergehenden Ansprüche, wobei die Hälfte der axialen Breite des ersten Arbeitsgürtels (54) minus der Hälfte der axialen Breite des zweiten Arbeitsgürtels (56) in einem Bereich von 10 mm bis 18 mm liegt.

12. Reifen nach mindestens einem der vorhergehenden Ansprüche, wobei die oben genannten Nuten (34, 35, 36) Umfangsnuten darstellen; und wobei mindestens eine Nut, mehrere Nuten oder alle der oben genannten Umfangsnuten mit der oben genannten verstärkenden Laufflächenverbindung verstärkt sind.

13. Reifen nach mindestens einem der vorhergehenden Ansprüche, wobei die die Nuten verstärkende Laufflächenverbindung in der radialen Richtung unterhalb und/oder in der axialen Richtung auf einer Seite oder auf beiden Seiten der jeweiligen Nut (34, 35, 36) in Form einer Nutverstärkungsstruktur (37) angebracht ist; wobei die die Nuten verstärkende Laufflächenverbindung in der radialen Richtung darunter und in axialer Richtung auf beiden Seiten der jeweiligen Nut (34, 35, 36) in Form einer Nutverstärkungsstruktur (37) angeordnet ist, derart, dass die Nutverstärkungsstruktur (37) die Nut (34, 35, 36) umschließt.

14. Reifen nach mindestens einem der vorhergehenden Ansprüche, wobei die minimale Radialdicke (t) der Nutverstärkungsstruktur (37) unterhalb einer jeweiligen Nut (34, 35, 36) in einem Bereich von 2 bis 15 mm, vorzugsweise von 2 bis 5 mm liegt; und/oder wobei die minimale axiale Dicke der seitlich neben einer jeweiligen Nut (34, 35, 36) angebrachten Nutverstärkungsstruktur (37) in einem Bereich von 2 bis 15 mm, vorzugsweise von 2 bis 8 mm liegt.

## Revendications

1. Bandage pneumatique pour son utilisation sur des camions, dans lequel le bandage (10) comprend une bande de roulement (12) et une structure de ceintures (50) qui est disposée, dans la direction radiale, à l'intérieur de la bande de roulement (12) ; dans lequel la structure de ceintures (50) englobe une première ceinture de travail (54) et une deuxième ceinture de travail (56) ; dans lequel l'angle formé par la première et la deuxième ceinture de travail (54, 56) se situe dans une plage allant de 10 degrés à 50 degrés, telle qu'on la mesure par rapport à la direction circonférentielle du bandage (10) ; dans lequel la structure de ceintures (50) comprend en outre une ceinture (58) formant un angle relativement petit, qui possède des câblés de renforcement extensibles qui forment un angle d'au moins 5 degrés par rapport à la direction circonférentielle du bandage (10) ; et dans lequel la bande de roulement (12) comprend au moins une rainure (34, 35, 36) qui est renforcée avec un composé de bande de roulement ; **caractérisé en ce que** le composé de bande de roulement possède une résistance à la rupture qui est supérieure à 18 MPa et un allongement à la rupture qui est supérieur à 450 %, lorsqu'on réalise les mesures à 23 °C ; et **en ce que** le composé de bande de roulement possède une résistance à la rupture qui est supérieure à 12 MPa et un allongement à la rupture qui est supérieur à 600 %, lorsqu'on réalise les mesures à 100 °C.

2. Bandage selon la revendication 1, dans lequel l'angle formé par la première ceinture de travail (54) avec la direction circonférentielle du bandage (10) est différent de l'angle formé par la deuxième ceinture de travail (56) avec la direction circonférentielle du bandage (10).

3. Bandage selon la revendication 1, dans lequel l'angle formé par la première ceinture de travail (54) avec la direction circonférentielle du bandage (10) est supérieur à l'angle formé par la deuxième ceinture de travail (56) avec la direction circonférentielle du bandage (10).

4. Bandage selon au moins une des revendications précédentes, dans lequel la valeur absolue de la différence entre l'angle formé par la première ceinture de travail (54) avec la direction circonférentielle du bandage (10) moins l'angle formé par la deuxième ceinture de travail (56) avec la direction circonférentielle du bandage (10) est supérieure à 5 degrés.

5. Bandage selon au moins une des revendications précédentes, dans lequel le bandage (10) englobe en outre une ceinture de sommet (62) ; et dans lequel la largeur axiale de la ceinture (58) qui forme un angle relativement petit est supérieure à la largeur axiale de la ceinture de sommet (62).

6. Bandage selon la revendication 1, dans lequel la première et la deuxième ceinture de travail (54, 56) comprennent des câblés de renforcement extensibles.

7. Bandage selon la motivation 6, dans lequel les câblés de renforcement extensibles sont réalisés à partir d'un fil métallique qui possède un allongement en %, à 10 % de la charge de rupture, qui est supérieur à 0,2 %, en variante supérieur à 0,4 %, lorsqu'on prend la mesure à partir d'un fil métallique qui provient d'un bandage qui a été vulcanisé.

8. Bandage selon au moins une des revendications précédentes, dans lequel les câblés de renforcement extensibles de la ceinture (58) formant un angle relativement petit sont réalisés à partir d'un fil métallique qui possède un allongement en %, à 10 % de la charge de rupture, qui est supérieur à 0,2 %, en variante supérieur à 0,4 %, ou supérieur à 0,8 %, lorsqu'on prend la mesure à partir d'un fil métallique qui provient d'un bandage qui a été vulcanisé.

9. Bandage selon au moins une des revendications précédentes, dans lequel les câblés de renforcement extensibles de la ceinture (58) formant un angle relativement petit sont réalisés à partir d'un fil métallique qui possède un allongement en %, à 10 % de la charge de rupture, qui est supérieur à 1,2 %, lorsqu'on prend la mesure à partir d'un fil métallique qui provient d'un bandage qui a été vulcanisé.

10. Bandage selon au moins une des revendications précédentes, dans lequel l'écartement d'un câblé à l'autre entre la deuxième ceinture de travail (56) et la première ceinture de travail (54) est inférieur à 6 mm.

11. Bandage selon au moins une des revendications précédentes, dans lequel la moitié de la largeur axiale de la première ceinture de travail (54) moins la moitié de la largeur axiale de la deuxième ceinture de travail (56) se situe dans une plage allant de 10 mm à 18 mm.

12. Bandage selon au moins une des revendications précédentes, dans lequel lesdites rainures (34, 35, 36) représentent des rainures circonférentielles ; et dans lequel au moins une rainure, plusieurs rainures ou la totalité desdites rainures circonférentielles sont renforcées avec ledit composé de bande de roulement faisant office de renforcement.

13. Bandage selon au moins une des revendications précédentes, dans lequel le composé de bande de roulement qui renforce les rainures est disposé, dans la direction radiale, en dessous, et/ou dans la direction axiale, sur un côté ou sur les deux côtés de la rainure respective (34, 35, 36) sous la forme d'une structure de renforcement de rainure (37) ; dans lequel le composé de bande de roulement qui renforce les rainures est disposé, dans la direction radiale, en dessous, et dans la direction axiale, sur les deux côtés de la rainure respective (34, 35, 36) sous la forme d'une structure de renforcement de rainure (37), d'une manière telle que la structure de renforcement de rainure (37) renferme la rainure (34, 35, 36).

14. Bandage selon au moins une des revendications précédentes, dans lequel l'épaisseur radiale minimale (t) de la structure de renforcement de rainure (37) en dessous d'une rainure respective (34, 35, 36) se situe dans une plage allant de 2 à 15 mm, de préférence de 2 à 5 mm ; et/ou dans lequel l'épaisseur axiale minimale de la structure de renforcement de rainure (37) disposée latéralement en position adjacente à une rainure respective (34, 35, 36) se situe dans une plage allant de 2 à 15 mm, de préférence de 2 à 8 mm.
